# EUROPÄISCHE PATENTANMELDUNG

(11) **EP 4 016 139 A1**
(43) Veröffentlichungstag der Anmeldung: **22.06.2022**
(21) Anmeldenummer: 20216118.8
(22) Anmeldetag: 21.12.2020
(51) Int. Cl.: G01V 8/22, G01S 7/481, G01S 17/04

(54) **SENSORANORDNUNG**

(71) Anmelder: Leuze electronic GmbH + Co. KG, 73277 Owen/Teck (DE)
(72) Erfinder: Schreiber, Frank, 88255 Baienfurt (DE); Aldiek, Norbert, 73230 Kirchheim/Teck (DE)
(74) Vertreter: Ruckh, Rainer Gerhard

(57) **Zusammenfassung**

Die Erfindung betrifft eine Sensoranordnung (1) zur Erfassung von Objekten innerhalb eines Überwachungsbereichs mit einer Reihenanordnung von Sendelichtbündeln (2a, 2b) emittierenden Sendern (3a, 3b) und Empfangslichtbündeln empfangenden Empfängern (4a, 4b) an einem Rand des Überwachungsbereichs und mit einer Umlenkeinheit mit einer Anordnung von Umlenkelementen (10a, 10b, 11a, 11b) am gegenüberliegenden Rand des Überwachungsbereichs. Jeweils ein Umlenkelement (10a, 10b, 11a, 11b) ist einem Sender (3a, 3b) oder einem Empfänger (4a, 4b) zugeordnet. Jeweils ein Sender (3a, 3b) mit jeweils einem Empfänger (4a, 4b) bildet ein Strahlachsenpaar derart, dass bei freiem Überwachungsbereich das von diesem Sender (3a, 3b) emittierte Sendelichtbündel (2a, 2b) an der zugeordneten Umlenkeinheit dieses Strahlachsenpaars zweifach abgelenkt und als Empfangslichtbündel zum Empfänger (4a, 4b) des Strahlachsenpaars geführt ist. Eine Reihenanordnung benachbarter Sender (3a, 3b) ist vorgesehen, an welche eine Reihenanordnung benachbarter Empfänger (4a, 4b) anschließt. Die Abstrahlwinkel (∝), innerhalb derer die Sender (3a, 3b) die Sendelichtbündel (2a, 2b) abstrahlen und Öffnungswinkel (*β*) der Empfänger (4a, 4b) sind so dimensioniert, dass der Abstrahlwinkel (∝) und der Öffnungswinkel (*β*) eines Strahlachsenpaars innerhalb des Überwachungsbereichs nicht überlappen.

## Beschreibung

Die Erfindung betrifft eine Sensoranordnung gemäß dem Oberbegriff des Anspruchs 1.

Derartige Sensoranordnungen bilden Lichtgitteranordnungen, die typischerweise zur Gefahrenbereichsüberwachung im Bereich der Sicherheitstechnik eingesetzt werden.

Bekannte Sensoranordnungen dieser Art weisen in einem ersten Gehäuse an einem ersten Rand eines Überwachungsbereichs eine alternierende Anordnung von Sendern und Empfängern auf, wobei jeweils ein Sender und der benachbart zu diesem angeordnete Empfänger ein Strahlachsenpaar bilden. In einem zweiten Gehäuse am gegenüberliegenden Rand des Überwachungsbereichs ist eine Umlenkeinheit mit mehreren Umlenkelementen integriert. Dabei ist jedem Sender und jedem Empfänger jeweils ein Umlenkelement zugeordnet.

Bei freiem Überwachungsbereich wird vom Sender jedes Strahlachsenpaars ein Sendelichtbündel emittiert und durch den Überwachungsbereich geführt, an den zugeordneten Umlenkelementen umgelenkt und dann mit einem durch den Abstand der Umlenkelemente definierten Versatz als Empfangslichtbündel zurück zum Empfänger des Strahlachsenpaars geführt. Bei einem Objekteingriff in den Überwachungsbereich erfolgt für wenigstens ein Strahlachsenpaar eine Unterbrechung der Sendelichtbündel oder Empfangslichtbündel, wodurch ein sicherheitsgerichtetes Ausgangssignal generiert wird.

Eine derartige Sensoranordnung ist aus der EP 1 467 228 B1 bekannt. Die Sensoranordnung bildet eine optoelektronische Zugangsabsicherung zur Überwachung eines Schutzbereiches mit zumindest einem Lichtsender, einem Lichtempfänger, die in einem gemeinsamen Gehäuse untergebracht sind und wenigstens einem ersten und einem zweiten Reflexionselement, wobei ein Anteil der von dem Lichtsender entlang des Schutzbereiches ausgesandten Sendelichtkeule auf das erste Reflexionselement auftrifft, dabei zum zweiten Reflexionselement gelenkt wird und anschließend um einen Strahlabstand versetzt wieder entlang des Schutzbereiches zu dem Lichtempfänger umgelenkt wird. Die Sendelichtkeule und die vom Lichtempfänger aufgenommene Empfangslichtkeule weisen jeweils ein Strahlungsprofil auf, dessen Ausdehnung in Richtung des Strahlabstandes eine geringere Abmessung aufweist, als in der dazu rechtwinkligen Ausdehnung, so dass sich die annähernd gleich dimensionierte Sendelichtkeule, beziehungsweise die Empfangslichtkeule zweier benachbarter Lichtbündel, innerhalb des Schutzbereiches nicht überlappen.

Durch diese Ausbildung der Sendelichtkeulen und Empfangslichtkeulen werden Funktionsbeeinträchtigungen durch Umspiegelungen vermieden. Eine derartige Beeinträchtigung der Funktion kommt bei einer Überlappung der Sendelichtkeule und der Empfangslichtkeule dann zustande, wenn sich innerhalb des Überlappungsbereiches zum Beispiel ein Spiegel befindet, der das einfallende Sendelichtbündel zurückwirft und dieses, weil der Spiegel dann auch innerhalb der Empfangslichtkeule ist, auf den Lichtempfänger gelangt. Die wirksame Länge des Schutzbereiches ist dadurch verkürzt, das heißt die Zone zwischen dem Spiegel und der Umlenkeinheit ist ungesichert. Die deshalb notwendige Einschränkung der Sendelicht- und Empfangslichtkeule wiederum verursacht beim Einsatz der Zugangsabsicherung eine hohe Anforderung an die Justage der Lichtsender, weil diese exakt auf die Umlenkeinheit ausgerichtet sein müssen.

Der Erfindung liegt die Aufgabe zugrunde, eine Sensoranordnung der eingangs genannten Art bereitzustellen, welche bei einfachem Aufbau eine hohe Funktionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung zur Erfassung von Objekten innerhalb eines Überwachungsbereichs mit einer Reihenanordnung von Sendelichtbündeln emittierenden Sendern und Empfangslichtbündeln empfangenden Empfängern an einem Rand des Überwachungsbereichs und mit einer Umlenkeinheit mit einer Anordnung von Umlenkelementen am gegenüberliegenden Rand des Überwachungsbereichs. Jeweils ein Umlenkelement ist einem Sender oder einem Empfänger zugeordnet. Jeweils ein Sender bildet mit jeweils einem Empfänger ein Strahlachsenpaar derart, dass bei freiem Überwachungsbereich das von diesem Sender emittierte Sendelichtbündel an der zugeordneten Umlenkeinheit dieses Strahlachsenpaars zweifach abgelenkt und als Empfangslichtbündel zum Empfänger des Strahlachsenpaars geführt ist. Eine Reihenanordnung benachbarter Sender ist vorgesehen, an welche eine Reihenanordnung benachbarter Empfänger anschließt. Die Abstrahlwinkel, innerhalb derer die Sender die Sendelichtbündel abstrahlen und Öffnungswinkel der Empfänger sind so dimensioniert, dass der Abstrahlwinkel und der Öffnungswinkel eines Strahlachsenpaars innerhalb des Überwachungsbereichs nicht überlappen.

Die erfindungsgemäße Sensoranordnung bildet eine mehrstrahlige Lichtgitteranordnung, die nach dem Reflexionslichtschrankenprinzip arbeitet. Ein Objekteingriff wird durch eine Unterbrechung des Strahlengangs wenigstens eines Sendelichtbündels oder eines Empfangslichtbündels eines Strahlachsenpaars festgestellt. Abhängig von den Empfangssignalen der Empfänger der Sensoranordnung wird in einer Auswerteeinheit als Ausgangssignal ein binäres Schaltsignal generiert, dessen Schaltzustände angeben, ob sich ein Objekt im Überwachungsbereich befindet oder nicht.

Besonders vorteilhaft ist die erfindungsgemäße Sensoranordnung als Sicherheits-Sensoranordnung ausgebildet, die im Bereich der Sicherheitstechnik, insbesondere im Bereich des Personenschutzes eingesetzt wird. Hierzu weist die Sensoranordnung einen fehlersicheren Aufbau auf. Dieser wird insbesondere durch eine zweikanalige Auswerteeinheit erzielt.

Ein typischer Anwendungsfall der erfindungsgemäßen Sensoranordnung ist die Gefahrenbereichsabsicherung an einer gefahrbringenden Anlage. Wird mit der Sensoranordnung ein Objekteingriff im Überwachungsbereich festgestellt, wird durch das dadurch generierte Schaltsignal die Anlage in einen sicherheitstechnisch unkritischen Zustand überführt. Insbesondere wird die Anlage abgeschaltet.

Ein wesentlicher Vorteil der erfindungsgemäßen Sensoranordnung besteht darin, dass diese eine Anordnung von benachbarten Sendern aufweist, an welche eine Anordnung von benachbarten Empfängern anschließt.

Damit wird auf einfache Weise die Gefahr einer Funktionsbeeinträchtigung der Sensoranordnung durch Umspiegelungen ausgeschlossen. Eine Umspiegelung tritt dann auf, wenn sich das Sendelichtbündel des Senders und das Empfangslichtbündel des zugeordneten Empfängers eines Strahlachsenpaars im Überwachungsbereich überlappen, beziehungsweise wenn der Abstrahlwinkel des Sendelichtbündels des Senders und der Öffnungswinkel des Empfängers eines Strahlachsenpaars überlappen.

Da bei der erfindungsgemäßen Sensoranordnung der Sender und Empfänger eines Strahlachsenpaars nicht benachbart liegen, sondern durch die Blockanordnungen der benachbarten Sender und der benachbarten Empfänger erheblich weiter entfernt liegen, wird die Gefahr von Umspiegelungen erheblich reduziert oder sogar völlig ausgeschlossen.

Gemäß einer ersten vorteilhaften Ausführungsform weist die Sensoranordnung eine Reihenanordnung von *N* Sendern und *N* Empfängern auf, bei welcher in einer Reihe der erste bis zum *N-ten* Sender nebeneinander angeordnet sind. Auf den *N-ten* Sender folgen der erste Empfänger und auf diesen die weiteren Empfänger bis zum *N-ten* Empfänger. Jeweils der *n-te* Sender und der *n-te* Empfänger dieser Reihenanordnung bilden ein Strahlachsenpaar, wobei *n* = 1, ... *N*.

Gemäß einer weiter vorteilhaften Ausführungsform weist die Sensoranordnung eine Reihenanordnung von *N* Sendern und *N* Empfängern auf, bei welcher in einer Reihe der erste bis zum *N-ten* Empfänger nebeneinander angeordnet sind. Auf den *N-ten* Empfänger folgen der erste Sender und auf diesen die weiteren Sender bis zum *N-ten* Sender. Jeweils der *n-te* Sender und der *n-te* Empfänger dieser Reihenanordnung bilden ein Strahlachsenpaar, wobei *n* = 1, *... N.*

Bei einem Abstand d benachbarter Sender beziehungsweise Empfänger in der Reihenanordnung der Sensoranordnung beträgt damit der Abstand jedes Senders und Empfängers eines Strahlachsenpaars *D = d* · *N,* das heißt gegenüber bekannten Sensoranordnungen, bei welchen die Sender und die Empfänger jedes Strahlachsenpaars benachbart zueinander liegen, wird der Abstand des Senders und Empfängers eines Strahlachsenpaars um das *N*-fache erhöht und die Gefahr einer Umspiegelung entsprechend verringert.

Da der Abstand des Senders und des Empfängers eines Strahlachsenpaars bei der erfindungsgemäßen Sensoranordnung erheblich erhöht ist, brauchen für eine spezifische Strahlformung der Sendelichtbündel und Empfangslichtbündel nur geringe oder überhaupt keine Maßnahmen vorgesehen sein, was den konstruktiven Aufwand der Sensoranordnung erheblich verringert. Prinzipiell können sogar rotationssymmetrische Strahlquerschnitte der Sendelichtbündel und Empfangslichtbündel verwendet werden. Dies hat den Vorteil, dass hierfür sehr einfache und kostengünstige Optikelemente eingesetzt werden können.

Da durch die erfindungsgemäße Blockanordnung der Sender und der Empfänger in der Sensoranordnung der Abstand zwischen Sender und Empfänger jedes Strahlachsenpaars erheblich erhöht ist, lassen sich große Abmessungen des Überwachungsbereichs, das heißt große Abstände zwischen der Reihenanordnung der Sender und Empfänger einerseits und der Umlenkeinheiten andererseits realisieren. Trotz der Strahlenaufweitung der Sendelichtbündel bei größeren Distanzen wird durch den großen Abstand des Senders und Empfängers eine Überlappung des Sendelichtbündels und Empfangslichtbündels eines Strahlachsenpaars beziehungsweise der Abstrahlwinkel des Senders und der Öffnungswinkel des Empfängers eines Strahlachsenpaars und damit die Gefahr einer Umspiegelung vermieden.

Gemäß einer vorteilhaften Ausführungsform der Erfindung sind die Umlenkelemente jedes Strahlachsenpaars so ausgebildet, dass selektiv nur die Sendelichtbündel des Senders dieses Strahlachsenpaars über diese zum Empfänger dieses Strahlachsenpaars geführt sind.

Hierzu sind insbesondere die Umlenkelemente unterschiedlicher Strahlachsenpaare versetzt zueinander angeordnet.

Damit wird erreicht, dass bei freiem Überwachungsbereich für jedes Strahlachsenpaar nur die Sendelichtbündel des Senders dieses Strahlachsenpaars auf den Empfänger dieses Strahlachsenpaars treffen. Durch diese Trennung der Sendelichtbündel der unterschiedlichen Strahlachsenpaare werden gegenseitige Beeinflussungen und dadurch bedingte Funktionsbeeinträchtigungen der Sensoranordnung vermieden.

Gemäß einer konstruktiv vorteilhaften Ausgestaltung sind die Sender und Empfänger einerseits und die Umlenkelemente andererseits jeweils in einem Gehäuse angeordnet.

Dabei bilden vorteilhaft die Reihenanordnung der Sender und Empfänger einerseits und die Anordnung der Umlenkelemente andererseits jeweils eine Vertikalanordnung.

In diesem Fall sind die Umlenkelemente unterschiedlicher Strahlachsenpaare in horizontaler Richtung versetzt zueinander angeordnet.

Insbesondere bei großen Abmessungen des Überwachungsbereichs, das heißt bei großen Abständen der Reihenanordnung der Sender und Empfänger zu den Umlenkeinheiten, kann es zur Überlappung benachbarter Sendelichtbündel kommen.

In diesem Fall wird nicht nur das Sendelichtbündel des Senders eines Strahlachsenpaars über die zugeordneten Umlenkeinheiten als Empfangslichtbündel zum Empfänger dieses Strahlachsenpaars geführt, sondern auch ein Anteil des benachbarten Sendelichtbündels, was zu Fehlfunktionen der Sensoranordnung führen kann.

Um derartige Fehlfunktionen auszuschließen, sind vorteilhaft den Sendelichtbündeln der einzelnen Sender unterschiedliche Codierungen aufgeprägt, die selektiv in den Empfängern des jeweiligen Strahlachsenpaars erfasst werden.

Dies bedeutet, dass den Sendelichtbündeln der einzelnen Strahlachsenpaare individuelle Codierungen aufgeprägt sind. Durch empfangsseitige Filterfunktionen oder dergleichen ist gewährleistet, dass im Empfänger jedes Strahlachsenpaars oder in einer nachgeordneten Auswertung nur die Sendelichtbündel des jeweiligen Strahlachsenpaars registriert oder ausgewertet werden, nicht aber die Sendelichtbündel benachbarter Strahlachsenpaare.

Ein anderer Ansatz zur Vermeidung derartiger Fehlfunktionen besteht darin, durch eine spezifische Strahlformung der Sendelichtbündel eine Überlappung benachbarter Sendelichtbündel zu verhindern.

Die Strahlformung ist derart ausgebildet, dass die Sendelichtbündel und die Empfangslichtbündel nichtrotationssymmetrische Strahlquerschnitte aufweisen, deren Ausdehnungen in Richtung der Reihenanordnung der Sender und Empfänger kleiner sind als senkrecht hierzu.

Derartige nichtrotationssymmetrische Strahlquerschnitte der Sendelichtbündel sorgen für eine Trennung der Sendelichtbündel im gesamten Überwachungsbereich. Diese nichtrotationssymmetrische Strahlquerschnitte können auf unterschiedliche Weisen realisiert werden.

Eine erste Variante sieht vor, dass die nichtrotationssymmetrischen Strahlquerschnitte der Sendelichtbündel und Empfangslichtbündel mit nichtrotationssymmetrischen lichtabstrahlenden Sendern generiert werden.

Eine zweite Variante sieht vor, dass die nichtrotationssymmetrischen Strahlquerschnitte der Sendelichtbündel und Empfangslichtbündel mit nichtrotationssymmetrischen Blenden generiert werden.

Gemäß einer dritten Variante werden die nichtrotationssymmetrischen Strahlquerschnitte der Sendelichtbündel und Empfangslichtbündel mit nichtrotationssymmetrischen Optikelementen generiert.

Insbesondere können sende- und empfangsseitig nichtrotationssymmetrische Optikelemente vorgesehen sein.

Gemäß einer ersten Ausführungsform sind die nichtrotationssymmetrischen Optikelemente in Form von astigmatischen Optikelementen gebildet.

Insbesondere ist ein astigmatisches Optikelement aus einer Kombination einer rotationssymmetrischen, sphärischen oder asphärischen Linse oder einer Linse mit zwei unterschiedlichen Linsenseiten gebildet.

Gemäß einer weiteren Ausführungsform weisen die nichtrotationssymmetrischen Optikelemente refraktive Optiken in Form von Linsenarrays oder Linsenreihen auf.

Vorteilhaft kann ein Linsenarray mit rotationssymmetrischen Linsenoberflächen mit einem langgezogenen Optikelement mit Zylindersymmetrie kombiniert sein.

Alternativ ist eine Anreihung von Einzellinsenflächen mit astigmatisch gekrümmten Oberflächen oder mit Freiformflächen oder mit torischen Flächen vorgesehen.

Weiterhin ist es möglich, dass eine Anreihung von sphärischen Einzellinsenflächen auf einer Seite einer Linsenreihe und eine langgezogene zylindrische Fläche auf deren anderer Seite vorgesehen ist.

Gemäß weiteren vorteilhaften Ausgestaltungen weisen die nichtrotationssymmetrischen Optikelemente optische Fasern oder Fresnel Optiken auf.

Die Erfindung wird im Folgenden anhand der Zeichnungen erläutert. Es zeigen:
- Figur 1:: Schematische Darstellung einer Sensoranordnung gemäß dem Stand der Technik.
- Figur 2:: Schematische Darstellung eines Ausführungsbeispiels der erfindungsgemäßen Sensoranordnung.
- Figur 3:: Darstellung des Querschnitts eines Sendelichtbündels der Sensoranordnung gemäß Figur 2.

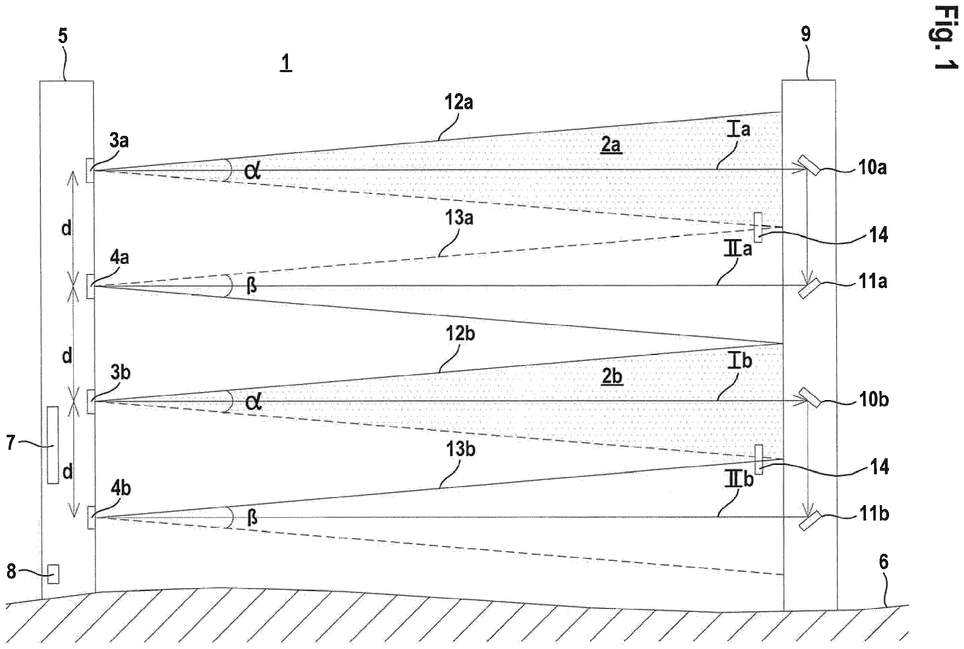

Figur 1 zeigt ein Ausführungsbeispiel einer aus dem Stand der Technik bekannten Sensoranordnung 1 zur Erfassung von Objekten in einem Überwachungsbereich.

Die Sensoranordnung 1 umfasst eine Reihenanordnung von zwei Sendelichtbündeln 2a, 2b emittierenden Sendern 3a, 3b und zwei Empfangslichtbündel empfangenden Empfängern 4a, 4b in einem ersten Gehäuse 5 an einem ersten Rand des Überwachungsbereichs. Das Gehäuse 5 ist auf einer Unterlage 6 so aufgestellt, dass dessen Längsachse in vertikaler Richtung verläuft. Entsprechend bilden die Sender 3a, 3b und Empfänger 4a, 4b eine in vertikaler Richtung verlaufende Reihenanordnung, wobei die Sender 3a, 3b und Empfänger 4a, 4b alternierend angeordnet sind.

Die Sender 3a, 3b können von Leuchtdioden, die Empfänger 4a, 4b von Photodioden gebildet sein.

In dem Gehäuse 5 sind weiterhin eine Auswerteeinheit 7 und eine Schnittstelle 8 angeordnet. Für den Fall, dass die Sensoranordnung 1 eine Sicherheits-Sensoranordnung für einen Einsatz im Bereich der Sicherheitstechnik bildet, weist die Auswerteeinheit 7 einen fehlersicheren redundanten Aufbau, beispielsweise in Form zweier sich zyklisch überwachenden Rechnereinheiten auf.

Am gegenüberliegenden Rand des Überwachungsbereichs ist ein zweites Gehäuse 9 vorgesehen, in dem eine Umlenkeinheit integriert ist. Auch dieses Gehäuse 9 ist so auf der Unterlage 6 aufgestellt, dass dessen Längsachse in vertikaler Richtung verläuft. In diesem Gehäuse 9 sind als Komponenten der Umlenkeinheit Umlenkelemente 10a, 10b, 11a, 11b angeordnet, die im einfachsten Fall von Umlenkspiegeln oder Reflektoren gebildet sind. Die Umlenkelemente 10a, 10b, 11a, 11b bilden eine Vertikalanordnung, wobei jedem Sender 3a, 3b beziehungsweise Empfänger 4a, 4b eine Umlenkeinheit zugeordnet ist.

Jeweils ein Sender 3a beziehungsweise 3b und der hierzu benachbarte Empfänger 4a beziehungsweise 4b bilden ein Strahlachsenpaar.

Bei freiem Überwachungsbereich werden vom Sender 3a des ersten Strahlachsenpaars Sendelichtbündel 2a mit einer in horizontaler Richtung verlaufenden Strahlachse Ia in den Überwachungsbereich ausgesendet und treffen dann auf das diesem zugeordnete Umlenkelement 10a. Dort wird das Sendelichtbündel 2a um 90° umgelenkt und trifft auf das zweite, dem Empfänger 4a dieses Strahlachsenpaars zugeordnete Umlenkelement 11a. Dort erfolgt eine weitere Umlenkung des Sendelichtbündels 2a, so dass dieses als Empfangslichtbündel mit einer parallel zum Sendelichtbündel 2a verlaufenden Strahlachse IIa zurück zum Empfänger 4a geführt ist.

Die Strahlachsen Ia, IIa, des Sendelichtbündels 2a und Empfangslichtbündels verlaufen in einem dem Abstand d zwischen Sender 3a, 3b und Empfänger 4a, 4b entsprechenden Abstand.

Für den Sender 3b und Empfänger 4b mit den zugeordneten Umlenkelementen 10b, 11b wird ein entsprechender Strahlengang erhalten, mit entsprechenden Strahlachsen Ib, IIb.

Bei freiem Überwachungsbereich durchqueren die Sendelichtbündel 2a, 2b der Sender 3a, 3b beider Strahlachsenpaare zweimal ungehindert den Überwachungsbereich und treffen als Empfangslichtbündel auf die Empfänger 4a, 4b dieser Strahlachsenpaare.

Bei einem Objekteingriff im Überwachungsbereich wird der Strahlengang der Sendelichtbündel 2a, 2b oder Empfangslichtbündel wenigstens eines Strahlachsenpaars unterbrochen.

In der Auswerteeinheit 7 wird in Abhängigkeit der Empfangssignale der Empfänger 4a, 4b ein binäres Schaltsignal generiert und über die Schnittstelle 8 ausgegeben.

Wie in Figur 1 dargestellt, strahlen die beiden Sender 3a, 3b Sendelicht innerhalb eines Abstrahlwinkels ∝, so dass jeweils ein Sendelichtbündel 2a, 2b in Form eines Sendekegels 12a, 12b erhalten wird. Wie weiterhin in Figur 1 dargestellt, weist jeder Empfänger 4a, 4b einen Öffnungswinkel *β* auf, so dass dieser innerhalb eines Empfangskegels 13a, 13b Licht empfangen kann.

Da, wie Figur 1 zeigt, die Sender 3a, 3b und Empfänger 4a, 4b jeweils eines Strahlachsenpaars nebeneinander liegen, liegen deren Sendekegel 12a beziehungsweise 12b und Empfangskegel 13a, 13b bei großen Abständen zu dem Gehäuse 5 dicht nebeneinander und überlappen dort bereits.

Wird in diesem Bereich ein Spiegel 14 oder dergleichen angebracht, werden von dort die Sendelichtbündel 2a, 2b zum Empfänger 4a, 4b des jeweiligen Strahlachsenpaars reflektiert. Damit sind die Bereiche zwischen den Spiegeln 14 und dem Gehäuse 9 ungesichert. Derartige Umspiegelungen können zu Fehlfunktionen der Sensoranordnung 1 führen.

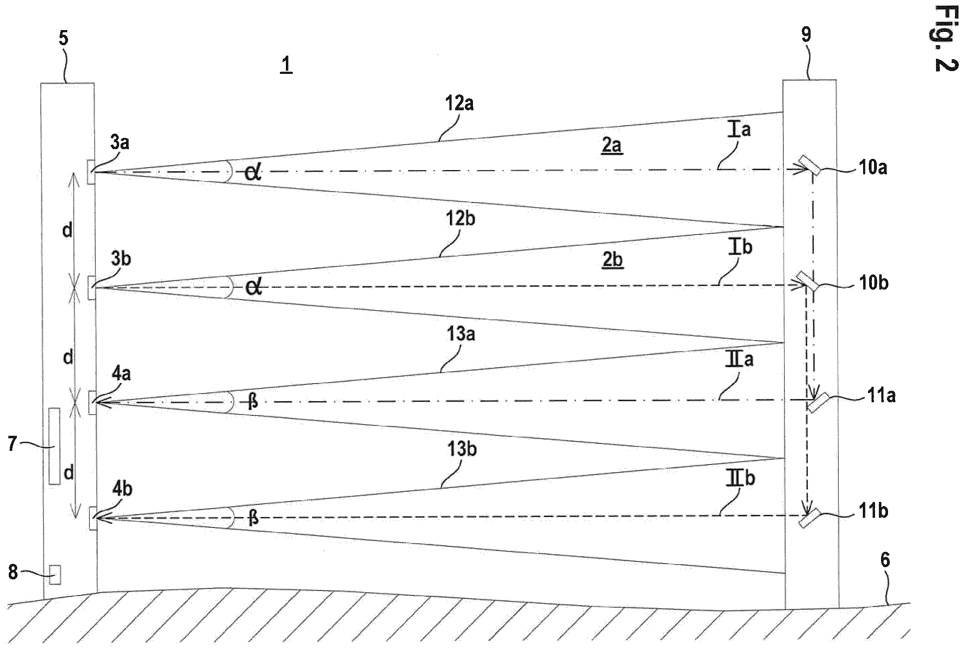

Derartige Fehlfunktionen werden bei der erfindungsgemäßen Sensoranordnung 1 vermieden, die beispielhaft in Figur 2 dargestellt ist.

Die erfindungsgemäße Sensoranordnung 1 gemäß Figur 2 unterscheidet sich von der Sensoranordnung 1 gemäß Figur 1 nur dadurch, dass nun die beiden Sender 3a, 3b nebeneinanderliegend angeordnet sind. Auf diese Blockanordnung folgt die Blockanordnung mit zwei nebeneinanderliegenden Empfängern 4a, 4b. Die Sender 3a, 3b und Empfänger 4a, 4b sind wieder äquidistant in jeweils einem Abstand d voneinander getrennt zueinander angeordnet. Die Anordnung der Umlenkeinheit ist hierzu angepasst. Ansonsten entspricht die Sensoranordnung 1 gemäß Figur 2 hinsichtlich Aufbau und Funktionsweise der Ausführungsform gemäß Figur 1.

Das Sendelicht vom Sender 3a des ersten Strahlachsenpaars wird bei freiem Überwachungsbereich wieder über die Umlenkelemente 10a, 11a zurück zum Empfänger 4a dieses Strahlachsenpaars geführt. Da nun der Sender 3a und Empfänger 4a nicht mehr benachbart liegen, sondern in größerer Distanz (2 d) zueinander liegen, ist auch bei großem Überwachungsbereich keine Überlappung der Sendekeulen und Empfangskegel 13a, 13b gegeben, wodurch eine Gefahr von Umspiegelungen sicher ausgeschlossen wird.

Dasselbe gilt für den Sender 3b und Empfänger 4b des zweiten Strahlachsenpaars.

Damit selektiv für jedes Strahlachsenpaar nur das Sendelichtbündel 2a, 2b des Senders 3a beziehungsweise 3b dieses Strahlachsenpaars über die Umlenkeinheiten 10a, 11a beziehungsweise 10b, 11b zum Empfänger 4a beziehungsweise 4b dieses Strahlachsenpaars geführt ist, sind die Umlenkeinheiten 10a, 11a des ersten Strahlachsenpaars in horizontaler Richtung versetzt zu den Umlenkeinheiten 10b, 11b des zweiten Strahlachsenpaars angeordnet.

Die Sensoranordnung 1 gemäß Figur 2 kann dahingehend erweitert sein, dass diese *N* (*N >* 2) nebeneinander in Abstand d liegende Sender 3a, 3b in einer ersten Blockanordnung und *N* (*N >* 2) nebeneinander in Abstand d liegende Empfänger 4a, 4b in einer zweiten Blockanordnung aufweist. Dabei können die Sender 3a, 3b oberhalb der Empfänger 4a, 4b liegen, analog zur Anordnung gemäß Figur 2. Alternativ können die Sender 3a, 3b auch unterhalb der Empfänger 4a, 4b liegen.

Bei dieser erweiterten Ausführungsform beträgt der Abstand d des Senders 3a, 3b und Empfängers 4a, 4b eines Strahlachsenpaars *D = d* · *N,* so dass aufgrund des weiter vergrößerten Abstands d Umspiegelungen noch sicherer vermieden werden. Dementsprechend können in diesem Fall noch größere Überwachungsbereiche ohne Gefahren von Umspiegelungen realisiert werden.

Wie in Figur 2 angedeutet, können bei großen Distanzen zum Gehäuse 5 benachbarte Sendelichtbündel 2a, 2b überlappen. Dies führt dazu, dass über die Umlenkeinheit 10a, 11a beziehungsweise 10b, 11b nicht nur das Sendelichtbündel 2a beziehungsweise 2b dieses Strahlachsenpaars, sondern auch Licht des benachbarten Strahlachsenpaars zum Empfänger 4a des Strahlachsenpaars gelangt.

Um dadurch bedingte Fehlfunktionen ausschließen zu können, sind den Sendelichtbündeln der einzelnen Sender 3a, 3b unterschiedliche Codierungen aufgeprägt, die selektiv in den Empfängern 4a, 4b des jeweiligen Strahlachsenpaars erfasst werden.

Prinzipiell kann jeder Sender 3a, 3b eine rotationssymmetrische Abstrahlcharakteristik des Sendelichts und jeder Empfänger 4a, 4b eine rotationssymmetrische Charakteristik des Öffnungswinkels *β* aufweisen, was besonders einfach dadurch realisiert werden kann, indem den Sendern 3a, 3b und Empfängern 4a, 4b rotationssymmetrische Linsen zugeordnet sind, die äußerst kostengünstige Optikelemente darstellen.

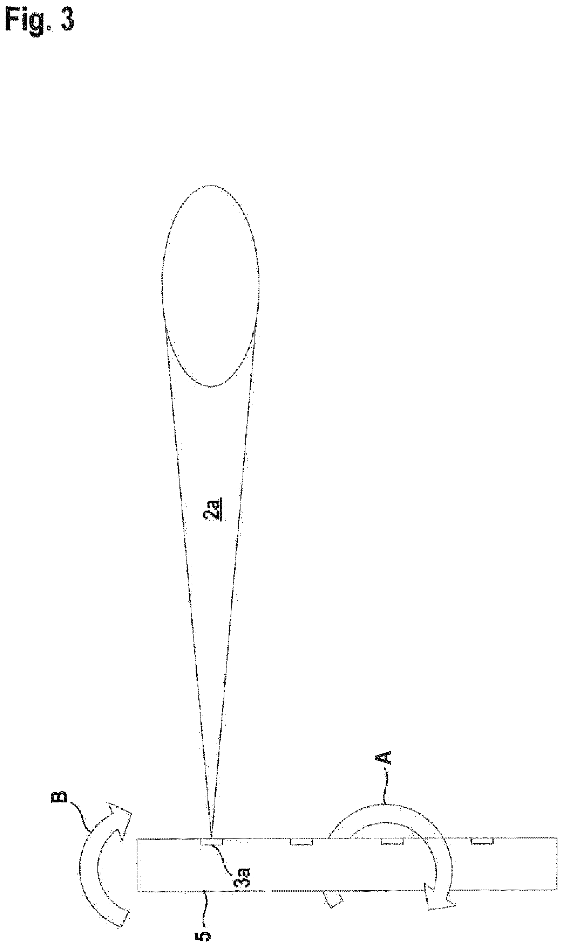

Um eine Überlappung benachbarter Sendelichtbündel 2a, 2b im Überwachungsbereich besonders sicher zu vermeiden, weist das Sendelichtbündel 2a wie in Figur 3 dargestellt, einen nichtrotationssymmetrischen Strahlquerschnitt auf, der in vertikaler Richtung eine geringere Ausdehnung als in horizontaler Richtung aufweist. Bei einer Reduktion des Strahlquerschnitts um 50 % kann die Größe des Überwachungsbereichs um den Faktor 2 gesteigert werden.

Diese Dimensionierung des Strahlquerschnitts des Sendelichtbündels 2a ist auch für die Justage der Sensoranordnung 1 erforderlich, die anhand der Empfangssignale des Empfängers 4a abhängig von der Lichtmenge des auftreffenden Sendelichtbündels 2a erfolgt.

Eine große Ausdehnung des Strahlquerschnitts in horizontaler Richtung ist vorteilhaft, weil nach Figur 3 eine Ausrichtung des Gehäuses 5 bezüglich einer Drehung (A) um seine Längsachse schwierig zu bewerkstelligen ist. Daher ist eine Ausrichtung durch Kippen des Lichtgitters (B) einfacher zu bewerkstelligen. Die hierfür erforderliche Ausdehnung des Sendelichtbündels 2a in vertikaler Richtung kann daher geringer sein.

Prinzipiell können die nichtrotationssymmetrischen Strahlquerschnitte der Sendelichtbündel 2a, 2b und Empfangslichtbündel mit nichtrotationssymmetrischen lichtabstrahlenden Sendern 3a, 3b generiert werden.

Vorteilhaft können die nichtrotationssymmetrischen Strahlquerschnitte der Sendelichtbündel 2a, 2b und Empfangslichtbündel mit nichtrotationssymmetrischen Blenden generiert werden.

Weiter ist es möglich, dass die nichtrotationssymmetrischen Strahlquerschnitte der Sendelichtbündel 2a, 2b und Empfangslichtbündel mit nichtrotationssymmetrischen Optikelementen generiert werden.

Auch die Öffnungswinkel *β* weisen in vertikaler Richtung eine kleinere Ausdehnung als in horizontaler Richtung auf. Bei einer Reduktion des Öffnungswinkels *β* in vertikaler Richtung um 50 % kann der Überwachungsbereich um Faktor 2 vergrößert werden. Die nichtrotationssymmetrische Charakteristik des Öffnungswinkels *β* kann mit geeigneten Optikelementen oder Blenden realisiert werden.

### B ezugszei chenli ste

- (1): Sensoranordnung
- (2a, b): Sendelichtbündel
- (3a, b): Sender
- (4a, b): Empfänger
- (5): Gehäuse
- (6): Unterlage
- (7): Auswerteeinheit
- (8): Schnittstelle
- (9): Gehäuse
- (10a, b): Umlenkelement
- (11a, b): Umlenkelement
- (12a, b): Sendekegel
- (13a, b): Empfangskegel
- (14): Spiegel

- (A): Drehung
- (B): Lichtgitter
- ∝: Abstrahlwinkel
- *β*: Öffnungswinkel
- Ia, b: Strahlachse
- IIa, b: Strahlachse

## Patentansprüche

1. Sensoranordnung (1) zur Erfassung von Objekten innerhalb eines Überwachungsbereichs mit einer Reihenanordnung von Sendelichtbündeln (2a, 2b) emittierenden Sendern (3a, 3b) und Empfangslichtbündeln empfangenden Empfängern (4a, 4b) an einem Rand des Überwachungsbereichs und mit einer Umlenkeinheit mit einer Anordnung von Umlenkelementen (10a, 10b, 11a, 11b) am gegenüberliegenden Rand des Überwachungsbereichs, wobei jeweils ein Umlenkelement (10a, 10b, 11a, 11b) einem Sender (3a, 3b) oder einem Empfänger (4a, 4b) zugeordnet ist, und wobei jeweils ein Sender (3a, 3b) mit jeweils einem Empfänger (4a, 4b) ein Strahlachsenpaar derart bildet, dass bei freiem Überwachungsbereich das von diesem Sender (3a, 3b) emittierte Sendelichtbündel (2a, 2b) an der zugeordneten Umlenkeinheit dieses Strahlachsenpaars zweifach abgelenkt und als Empfangslichtbündel zum Empfänger (4a, 4b) des Strahlachsenpaars geführt ist, **dadurch gekennzeichnet, dass** eine Reihenanordnung benachbarter Sender (3a, 3b) vorgesehen ist, an welche eine Reihenanordnung benachbarter Empfänger (4a, 4b) anschließt, und dass Abstrahlwinkel (∝), innerhalb derer die Sender (3a, 3b) die Sendelichtbündel (2a, 2b) abstrahlen und Öffnungswinkel (*β*) der Empfänger (4a, 4b) so dimensioniert sind, dass der Abstrahlwinkel (∝) und der Öffnungswinkel (*β*) eines Strahlachsenpaars innerhalb des Überwachungsbereichs nicht überlappen.

2. Sensoranordnung (1) nach Anspruch 1, **dadurch gekennzeichnet, dass** diese eine Reihenanordnung von *N* Sendern (3a, 3b) und *N* Empfängern (4a, 4b) aufweist, bei welcher in einer Reihe der erste bis zum *N-ten* Sender (3a, 3b) nebeneinander angeordnet sind, wobei auf den *N-ten* Sender (3b) der erste Empfänger (4a) und auf diesen die weiteren Empfänger (4b) bis zum *N-ten* Empfänger folgen, und dass jeweils der *n-te* Sender und der *n-te* Empfänger dieser Reihenanordnung ein Strahlachsenpaar bilden, wobei *n* = 1, *...N.*

3. Sensoranordnung (1) nach Anspruch 1, **dadurch gekennzeichnet, dass** diese eine Reihenanordnung von *N* Sendern und *N* Empfängern aufweist, bei welcher in einer Reihe der erste bis zum *N-ten* Empfänger (4a, 4b) nebeneinander angeordnet sind, wobei auf den *N-ten* Empfänger (4b) der erste Sender (3a) und auf diesen die weiteren Sender (3b) bis zum *N-ten* Sender folgen, und dass jeweils der *n-te* Sender und der *n-te* Empfänger dieser Reihenanordnung ein Strahlachsenpaar bilden, wobei *n* = 1, *... N.*

4. Sensoranordnung (1) nach einem der Ansprüche 1 bis 3, **dadurch gekennzeichnet, dass** die Umlenkelemente (10a, 10b, 11a, 11b) jedes Strahlachsenpaars so ausgebildet sind, dass selektiv nur die Sendelichtbündel (2a, 2b) des Senders (3a, 3b) dieses Strahlachsenpaars über diese zum Empfänger (4a, 4b) dieses Strahlachsenpaars geführt sind.

5. Sensoranordnung (1) nach Anspruch 4, **dadurch gekennzeichnet, dass** die Umlenkelemente (10a, 10b, 11a, 11b) unterschiedlicher Strahlachsenpaare versetzt zueinander angeordnet sind.

6. Sensoranordnung (1) nach einem der Ansprüche 1 bis 5, **dadurch gekennzeichnet, dass** die Reihenanordnung der Sender (3a, 3b) und Empfänger (4a, 4b) einerseits und die Anordnung der Umlenkelemente (10a, 10b, 11a, 11b) andererseits jeweils eine Vertikalanordnung bilden.

7. Sensoranordnung (1) nach einem der Ansprüche 5 und 6, **dadurch gekennzeichnet, dass** die Umlenkelemente (10a, 10b, 11a, 11b) unterschiedlicher Strahlachsenpaare in horizontaler Richtung versetzt zueinander angeordnet sind.

8. Sensoranordnung (1) nach einem der Ansprüche 1 bis 7, **dadurch gekennzeichnet, dass** die Sender (3a, 3b) und Empfänger (4a, 4b) einerseits und die Umlenkelemente (10a, 10b, 11a, 11b) andererseits jeweils in einem Gehäuse (5, 9) angeordnet sind.

9. Sensoranordnung (1) nach einem der Ansprüche 1 bis 8, **dadurch gekennzeichnet, dass** den Sendelichtbündeln (2a, 2b) der einzelnen Sender (3a, 3b) unterschiedliche Codierungen aufgeprägt sind, die selektiv in den Empfängern (4a, 4b) des jeweiligen Strahlachsenpaars erfasst werden.

10. Sensoranordnung (1) nach einem der Ansprüche 1 bis 9, **dadurch gekennzeichnet, dass** die Sendelichtbündel (2a, 2b) und die Empfangslichtbündel nichtrotationssymmetrische Strahlquerschnitte aufweisen, deren Ausdehnungen in Richtung der Reihenanordnung der Sender (3a, 3b) und Empfänger (4a, 4b) kleiner sind als senkrecht hierzu.

11. Sensoranordnung (1) nach Anspruch 10, **dadurch gekennzeichnet, dass** die nichtrotationssymmetrischen Strahlquerschnitte der Sendelichtbündel (2a, 2b) und Empfangslichtbündel mit nichtrotationssymmetrischen lichtabstrahlenden Sendern (3a, 3b) generiert werden.

12. Sensoranordnung (1) nach Anspruch 10, **dadurch gekennzeichnet, dass** die nichtrotationssymmetrischen Strahlquerschnitte der Sendelichtbündel (2a, 2b) und Empfangslichtbündel mit nichtrotationssymmetrischen Blenden generiert werden.

13. Sensoranordnung (1) nach Anspruch 10, **dadurch gekennzeichnet, dass** die nichtrotationssymmetrischen Strahlquerschnitte der Sendelichtbündel (2a, 2b) und Empfangslichtbündel mit nichtrotationssymmetrischen Optikelementen generiert werden.

14. Sensoranordnung (1) nach Anspruch 13, **dadurch gekennzeichnet, dass** sende- und empfangsseitig nichtrotationssymmetrische Optikelemente vorgesehen sind.

15. Sensoranordnung (1) nach Anspruch 13, **dadurch gekennzeichnet, dass** die nichtrotationssymmetrischen Optikelemente in Form von astigmatischen Optikelementen gebildet sind.

16. Sensoranordnung (1) nach Anspruch 15, **dadurch gekennzeichnet, dass** ein astigmatisches Optikelement gebildet ist aus einer Kombination einer rotationssymmetrischen, sphärischen oder asphärischen Linse oder einer Linse mit zwei unterschiedlichen Linsenseiten.

17. Sensoranordnung (1) nach einem der Ansprüche 13 oder 14, **dadurch gekennzeichnet, dass** die nichtrotationssymmetrischen Optikelemente refraktive Optiken in Form von Linsenarrays oder Linsenreihen aufweisen.

18. Sensoranordnung (1) nach Anspruch 17, **dadurch gekennzeichnet, dass** ein Linsenarray mit rotationssymmetrischen Linsenoberflächen mit einem langgezogenen Optikelement mit Zylindersymmetrie kombiniert ist.

19. Sensoranordnung (1) nach Anspruch 17, **dadurch gekennzeichnet, dass** eine Anreihung von Einzellinsenflächen mit astigmatisch gekrümmten Oberflächen oder mit Freiformflächen oder mit torischen Flächen vorgesehen ist.

20. Sensoranordnung (1) nach Anspruch 17, **dadurch gekennzeichnet, dass** eine Anreihung von sphärischen Einzellinsenflächen auf einer Seite einer Linsenreihe und eine langgezogene zylindrische Fläche auf deren anderer Seite vorgesehen ist.

21. Sensoranordnung (1) nach einem der Ansprüche 13 oder 14, **dadurch gekennzeichnet, dass** die nichtrotationssymmetrischen Optikelemente optische Fasern oder Fresnel Optiken aufweisen.
